# EUROPÄISCHE PATENTSCHRIFT

(11) **EP 4 104 277 B1**
(45) Veröffentlichungstag und Bekanntmachung des Hinweises auf die Patenterteilung: **01.07.2026**
(21) Anmeldenummer: 21704767.9
(22) Anmeldetag: 10.02.2021
(51) Int. Cl.: H02K 9/197, H02K 7/00, H02K 1/32

(54) **ROTORHOHLWELLE**
HOLLOW ROTOR SHAFT
ARBRE DE ROTOR CREUX

(30) Priorität: 14.02.2020 DE 102020103875
(43) Veröffentlichungstag der Anmeldung: 21.12.2022
(73) Patentinhaber: Winkelmann Powertrain Components GmbH + Co. KG., 59227 Ahlen (DE)
(72) Erfinder: RUDERT, Bernd, 59229 Ahlen (DE); WEGENER, Jens, 48329 Havixbeck (DE); GRÜNEWALD, Ralf, 48317 Drensteinfurt (DE); GÖTTMANN, Alexander, 48317 Drensteinfurt (DE)
(74) Vertreter: Schneiders & Behrendt Bochum
(86) Internationale Anmeldenummer: PCT/EP2021/053184
(87) Internationale Veröffentlichungsnummer: WO 2021/160660

(56) Entgegenhaltungen:
- JP-A- 2001 197 705
- JP-A- 2004 159 402
- JP-U- S5 214 902

## Beschreibung

Die Erfindung betrifft eine Rotorhohlwelle für einen um eine Längsachse rotierenden Rotor einer elektrischen Maschine mit einem Zylindermantel, der einen Wellenhohlraum umgibt, sowie beidseitig an dem Zylindermantel angeordneten Stirnflanschen, wobei jeder Stirnflansch jeweils in einen Wellenzapfen übergeht und wobei in einem der Stirnflansche, insbesondere in dessen Wellenzapfen, ein Einlass vorgesehen ist, über welchen ein Kühlmedium in den Wellenhohlraum und an eine Innenfläche des Zylindermantels leitbar ist, wobei innerhalb des Wellenhohlraums Kühlmediumleitelemente vorgesehen sind, welche das über den Einlass eintretende Kühlmedium über die Innenfläche des Zylindermantels verteilen, wobei im Zylindermantel wenigstens eine Kühlmediumaustrittsöffnung vorgesehen ist, wobei die Rotorhohlwelle einstückig durch Umformen aus einem rohrförmigen Ausgangskörper gebildet ist, wobei die Kühlmediumleitelemente als aus der Innenfläche des Zylindermantels geformte, in den Wellenhohlraum ragende erhabene Kontur ausgebildet sind.

Rotoren für elektrische Maschinen mit einer Rotorhohlwelle und auf dieser angeordneten Blechen, welche beispielsweise zu Blechpaketen zusammengefasst sind, sind bekannt. Diese Rotoren finden z.B. Einsatz in Asynchronmaschinen oder in permanent erregten Synchronmaschinen. Elektrische Maschinen werden im Betrieb z.B. wegen der elektromagnetischen Aktivität im Rotor stark erwärmt. Eine Erwärmung der elektrischen Maschine führt zu einer Reduzierung des Wirkungsgrades. Um die Leistung einer elektrischen Maschine zu steigern und insbesondere deren Wirkungsgrad zu optimieren, werden Kühlsysteme integriert. Dabei sind unterschiedliche Konzepte von Kühlsystemen, insbesondere zur Flüssigkeitskühlung, bekannt.

Aus DE 10 2016 202 416 A1 ist eine Rotorhohlwelle mit den Merkmalen des Oberbegriffes des Patentanspruches 1 bekannt. Diese Rotorhohlwelle weist Strukturelemente auf, die nicht als Kühlmediumleitelemente vorgesehen sind, aufgrund ihrer Geometrie aber eine gewisse Kühlmediumleitfunktion erfüllen, auch wenn sie grundsätzlich zur formschlüssigen Aufnahme von komplementären Strukturelementen eines Kühlkörpers dienen. Die nutförmigen Bereiche der Strukturelemente sind somit weitgehend ausgefüllt und Kühlmedium kann durch die Bereiche der Strukturelemente nahezu gar nicht fließen. Zur Kühlung ist ein in die Rotorhohlwelle eingesetzter zusätzlicher Kühlkörper vorgesehen.

Aus DE 10 2015 223 631 B4 ist eine weitere Rotorhohlwelle bekannt. Diese gebaute Rotorhohlwelle für einen um eine Längsachse rotierenden Rotor einer elektrischen Maschine weist einen Zylindermantel, welcher einen Wellenhohlraum umgibt, sowie beidseitig an dem Zylindermantel angeordnete Stirnflansche auf, wobei sich an den Stirnflanschen jeweils ein Wellenzapfen befindet und wobei in einem der Stirnflansche, insbesondere in dessen Wellenzapfen ein Einlass vorgesehen ist, über welchen ein Kühlmedium in den Wellenhohlraum und an eine Innenfläche des Zylindermantels leitbar ist, wobei innerhalb des Wellenhohlraums ein senkrecht zur Längsachse symmetrisch ausgebildetes und mit dem Rotor verbundenes Kühlmediumverteilelement angeordnet ist, welches das über den Einlass eintretende Kühlmedium über einen Aufnahmebereich aufnimmt, über einen Ableitbereich in Richtung der Innenfläche des Zylindermantels führt und über einen Abgabebereich auf die Innenfläche abgibt. Diese bekannte Rotorhohlwelle besteht somit aus mehreren, miteinander zu verbindenden Einzelteilen, was die Herstellung und vor allem die Montage aufwendig macht.

Aus JP 2004 159402 A ist eine Rotorhohlwelle für einen um eine Längsachse rotierenden Rotor einer elektrischen Maschine mit einem Zylindermantel, der einen Wellenhohlraum umgibt, sowie beidseitig an dem Zylindermantel angeordneten Stirnflanschen bekannt, wobei jeder Stirnflansch jeweils in einen Wellenzapfen übergeht und wobei in einem der Stirnflansche, insbesondere in dessen Wellenzapfen, ein Einlass vorgesehen ist, über welchen ein Kühlmedium in den Wellenhohlraum und an eine Innenfläche des Zylindermantels leitbar ist. Innerhalb des Wellenhohlraumes sind Kühlmediumleitelemente vorgesehen, welche das über den Einlass eintretenden Kühlmedium über die Innenfläche des Zylindermantels verteilen, wobei im Zylindermantel wenigstens eine Kühlmediumaustrittsöffnung vorgesehen ist, wobei die Kühlmediumleitelemente als aus der Innenfläche des Zylindermantels geformte, in den Wellenhohlraum ragende erhabene Kontur ausgebildet sind.

Aufgabe der Erfindung ist, eine Rotorhohlwelle zu schaffen, die mit geringem Aufwand hergestellt und montiert und bei der die Kühlleistung optimiert werden kann.

Diese Aufgabe wird bei einer Rotorhohlwelle der eingangs bezeichneten Art erfindungsgemäß dadurch gelöst, dass diese mittels Streckdrücken gebildet ist, wobei die erhabene Kontur aus der Innenfläche des Zylindermantels herausgedrückt ist, wobei die beiden Stirnflansche mit jeweiligem Wellenzapfen durch Drücken der beiden Enden des Ausgangskörpers geformt sind, und dass die wenigstens eine Kühlmediumaustrittsöffnung in der erhabenen Kontur ausgebildet ist.

Es wird somit eine einstückige Rotorhohlwelle zur Verfügung gestellt, die aus einem rohrförmigen Ausgangskörper durch Streckdrücken und Drücken hergestellt ist. Aufgrund der Einstückigkeit sind keine zusätzlichen Montageschritte erforderlich. Durch die Umformvorgänge wird außerdem eine höhere Steifigkeit der Rotorhohlwelle erreicht. Außerdem wird die Kühlleistung verbessert, weil das Kühlmedium direkt entlang der Innenwandung der Rotorhohlwelle durch die Kühlmediumleitelemente strömt. Dabei ist durch die Anordnung der wenigstens einen Kühlmediumaustrittsöffnung in der erhabenen Kontur besonders vorteilhaft gewährleistet, dass das Kühlmedium automatisch aus dem Wellenhohlraum austritt, wenn der zugehörige kanalförmige Bereich gefüllt ist, so dass eine definierte Kühlmediummenge durch die Rotorhohlwelle strömt. Dadurch lässt sich die Kühlleistung gezielt einstellen.

Dabei ist bevorzugt vorgesehen, dass die erhabene Kontur mehrere umfänglich an der Innenfläche des Zylindermantels verteilte kanalförmige Bereiche bildet. Die erhabenen Bereiche sind dementsprechend stegförmig.

In bevorzugter Ausgestaltung ist vorgesehen, dass die kanalförmigen Bereiche wenigstens bereichsweise helixförmig und/oder geradlinig ausgebildet sind. Der Innendorn des Drückwerkzeuges kann dann herausgedreht und/oder herausgezogen werden. Auch gegenläufig helixförmige kanalförmige Bereiche können vorgesehen sein, wobei dann ein mehrteiliger Innendorn eingesetzt wird, dessen einzelne Teile in unterschiedlicher Drehrichtung herausgedreht werden. Alternativ können auch andere, z.B. nockenartige Konturen gewählt werden, dann ist ggf. ein Spreizdorn notwendig.

Besonders vorteilhaft ist es, wenn die wenigstens eine Kühlmediumaustrittsöffnung in der erhabenen Kontur ausgebildet ist. Das Kühlmedium tritt dann automatisch aus dem Wellenhohlraum aus, wenn der zugeordnete kanalförmige Bereich gefüllt ist und ansonsten sozusagen überlaufen würde.

Die Erfindung betrifft auch einen Rotor mit einer mit Blechpaketen bestückten vorbeschriebenen Rotorhohlwelle.

Die Erfindung ist nachstehend anhand der Zeichnungen beispielhaft näher erläutert. Diese zeigen in
- Fig. 1: einen Schnitt durch eine Rotorhohlwelle nach einer ersten Ausgestaltung,
- Fig. 2: einen Schnitt durch eine Rotorhohlwelle nach einer zweiten Ausgestaltung,
- Fig. 3: eine perspektivische Schnittdarstellung der Rotorhohlwelle nach Fig. 2,
- Fig. 4: die Rotorhohlwelle nach Fig. 2 und 3 in leicht abgewandelter Ausgestaltung,
- Fig. 5: eine Rotorhohlwelle in einer dritten Ausgestaltung in einem perspektivischen Schnitt,
- Fig. 6: die Rotorhohlwelle nach Fig. 5 im Schnitt,
- Fig. 7: eine perspektivische Darstellung eines rohrförmigen Ausgangskörpers im Längsschnitt,
- Fig. 8: eine perspektivische Darstellung während des Streckdrückens des Ausgangskörpers,
- Fig. 9: eine perspektivische Darstellung während des Entfernens eines zweigeteilten Innendorns,
- Fig. 10: eine Schnittdarstellung während der Anformung des ersten Stirnflansches mit Wellenzapfen und
- Fig. 11: einen Schnitt während der Anformung des zweiten Stirnflansches mit Wellenzapfen.

Eine Rotorhohlwelle für einen um eine Längsachse L rotierenden, nicht dargestellten Rotor einer elektrischen Maschine ist allgemein mit 1 bezeichnet. Diese Rotorhohlwelle 1 weist einen Zylindermantel 2 auf, der einen Wellenhohlraum 3 umgibt. Beidseitig an den Zylindermantel 2 der Rotorhohlwelle 1 sind jeweils Stirnflansche einstückig angeformt, nämlich ein erster Stirnflansch 4 und ein zweiter Stirnflansch 5. Jeder Stirnflansch 4, 5 geht in einen Wellenzapfen über, nämlich einen ersten Wellenzapfen 6 und einen zweiten Wellenzapfen 7. Im ersten Wellenzapfen 6 ist ein Einlass 8 vorgesehen, der in den Wellenhohlraum 3 mündet und zur Zuführung eines Kühlmediums in Richtung des Pfeiles 9 dient.

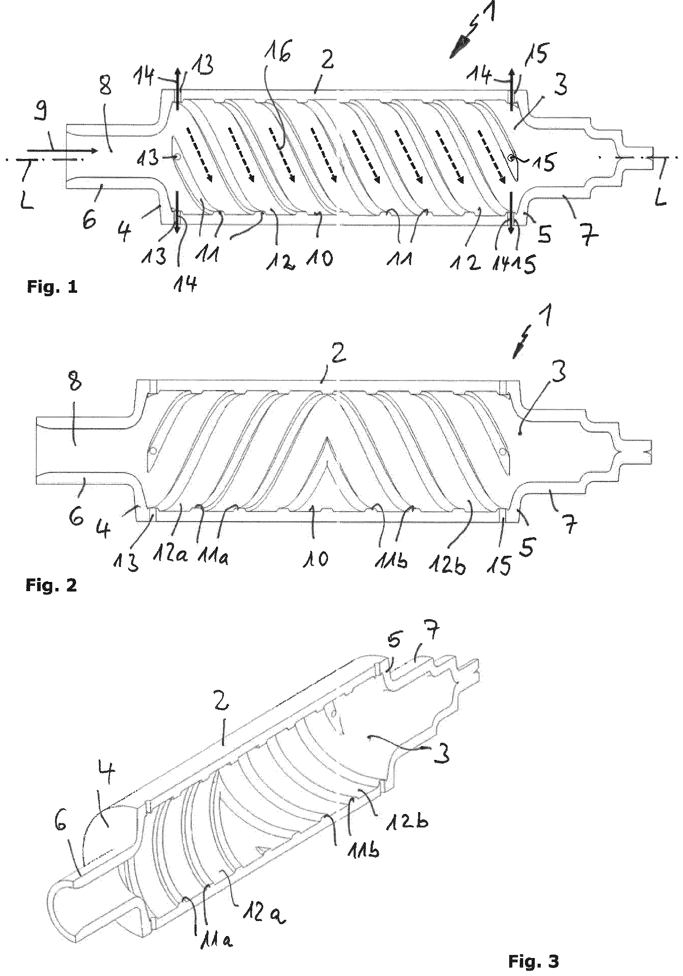

Wenn sich die Rotorhohlwelle 1 um die Längsachse L dreht, gelangt das Kühlmedium aufgrund der Fliehkraft an eine Innenfläche 10 des Wellenhohlraumes 3, wobei zur gleichmäßigen Verteilung des Kühlmediums über die gesamte Innenfläche 10 des Wellenhohlraumes 3 Kühlmediumleitelemente vorgesehen sind. Diese Kühlmediumleitelemente sind als aus der Innenfläche 10 herausgedrückte, in den Wellenhohlraum 3 ragende, erhabene Kontur ausgebildet, die beim Ausführungsbeispiel nach Fig. 1 von helixförmigen Stegen 11 gebildet ist, die sich entlang der gesamten Länge des Wellenhohlraumes 3 erstrecken. Die von diesen helixförmigen Stegen 11 gebildete, erhabene Kontur bildet somit mehrere umfänglich an der Innenfläche 10 des Zylindermantels 2 verteilte kanalförmige Bereiche 12, die aufgrund der Gestaltung der Stege 11 beim Ausführungsbeispiel nach Fig. 1 ebenfalls helixförmig ausgebildet sind.

Im Zylindermantel 2 sind am Anfang und am Ende des Wellenhohlraumes 3 in der erhabenen Kontur, d.h. in den helixförmigen Stegen 11 jeweils Kühlmediumaustrittsöffnungen 13 und 15 vorgesehen, durch welche das Kühlmedium aus dem Wellenhohlraum 3 radial nach außen in den Bereich der nicht dargestellten Blechpakete des Rotors austritt. Dies ist durch Pfeile 14 angedeutet. Das Kühlmedium wird zunächst in Richtung des Pfeiles 9 in den Wellenhohlraum 3 eingeleitet und gelangt aufgrund der helixförmigen, kanalförmigen Bereiche 12 und der Fliehkraft in Richtung der gestrichelten Pfeile 16 im Wesentlichen vollflächig an die Innenfläche 10 des Zylindermantels 2 und kühlt diesen und die umgebenden Blechpakete.

In den Fig. 2 und 3 ist eine abgewandelte Ausführungsform der Rotorhohlwelle 1 dargestellt. Diese unterscheidet sich von der Ausführungsform nach Fig. 1 nur dadurch, dass die erhabene Kontur und die dadurch gebildeten kanalförmigen Bereiche anders gestaltet sind. Es gibt nämlich gegenläufig helixförmige, Stege 11a, 11b und dementsprechend gegenläufig helixförmige kanalförmige Bereiche 12a, 12b, die jeweils in der Mitte der Längserstreckung des Wellenhohlraumes 3 ineinander übergehen.

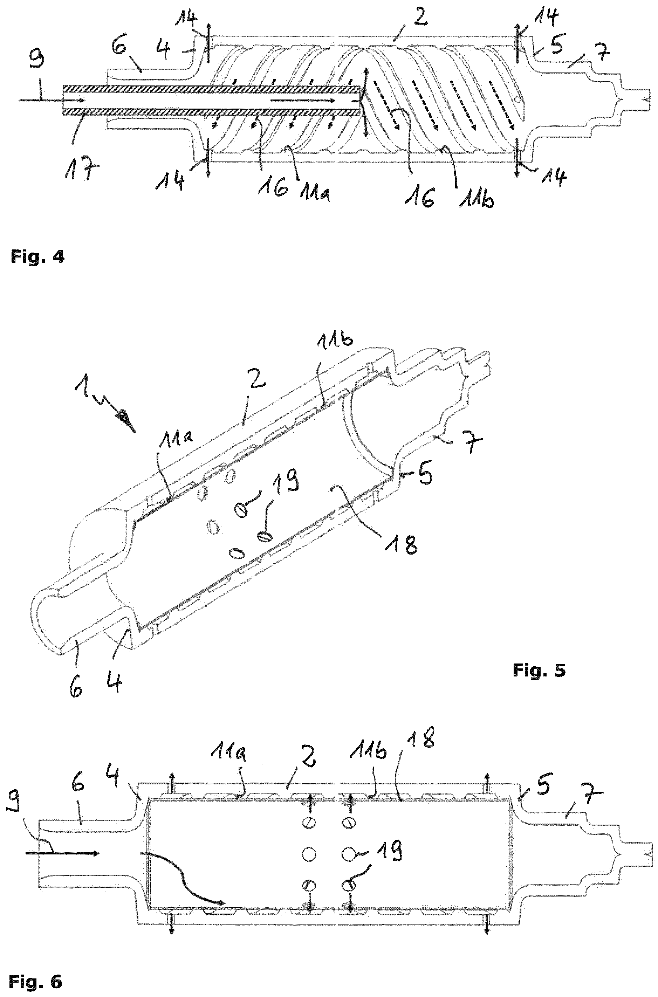

Die Ausgestaltung der Rotorhohlwelle 1 nach Fig. 4 unterscheidet sich von derjenigen nach den Fig. 2 und 3 dadurch, dass zusätzlich in den ersten Wellenzapfen 6 ein bis in die Mitte des Wellenhohlraumes 3 eingreifendes Kühlmittelzuführrohr 17 eingesetzt ist. Dadurch ergibt sich das durch die Pfeile 9 und 14 und 16 angedeutete Strömungsbild.

In den Fig. 5 und 6 ist ein weiteres Ausführungsbeispiel einer Rotorhohlwelle 1 dargestellt, die vom Grundaufbau derjenigen nach den Fig. 2 und 3 entspricht. Dabei ist in dem Wellenhohlraum 3 ein weiteres rohrförmiges Kühlmediumleitelement 18 eingesetzt, das beim Ausführungsbeispiel im mittleren Bereich Kühlmediumdurchtrittsöffnungen 19 aufweist. Das Kühlmittelleitelement liegt außenseitig an den Stegen 11a und 11b an. Bei diesem Ausführungsbeispielen sind die Kühlmediumaustrittsöffnungen in den kanalförmigen Bereichen 12a, 15 ausgebildet.

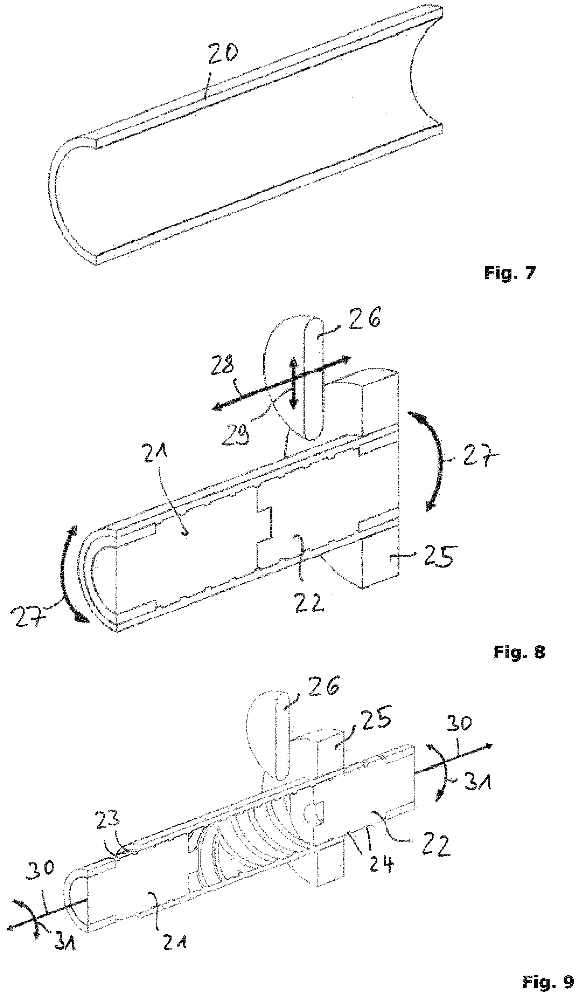

In den Fig. 7 bis 11 ist ein Verfahrensablauf zur Herstellung einer einstückigen Rotorhohlwelle 1 nach Fig. 2 und 3 dargestellt.

In Fig. 7 ist ein rohrförmiger Ausgangskörper 20 dargestellt, der durch Streckdrücken und Drücken in nachfolgend beschriebener Weise in die Rotorhohlwelle 1 nach den Fig. 2 und 3 umgeformt wird.

Der rohrförmige Ausgangskörper 20 wird auf einem zweigeteilten Innendorn 21, 22 angeordnet, wobei die Innendorne 21 und 22 jeweils eine negativ erhabene Kontur aufweisen, die in Fig. 9 angedeutet ist. Dabei weist der Innendorn 21 zu dem zu bildenden Steg 11a komplementäre, helixförmige Vertiefungen 23 und der Innendorn 22 zu dem Steg 11b komplementäre, helixförmige Vertiefungen 24 auf. Der rohrförmige Ausgangskörper 20 wird mittels wenigstens eines Spannwerkzeuges 25 eingespannt und gegenüber wenigstens einer Drückrolle 26 in Rotation versetzt, was durch einen Pfeil 27 angedeutet ist. Die Drückrolle 26 ist dabei sowohl in Längsrichtung (Pfeil 28) als auch in radialer Richtung (Pfeil 29) verfahrbar und verfährt streckdrückend entlang des rohrförmigen Ausgangskörpers 20, wodurch die Stege 11a und 11b im zu bildenden Wellenhohlraum 3 der zu bildenden Rotorhohlwelle 1 ausgebildet werden.

Nach Abschluss des Streckdrückens können beide Innendorne 21, 22 aus dem rohrförmigen Ausgangskörper 20 herausgedreht werden, was durch Pfeile 30 und Doppelpfeile 31 in Fig. 9 angedeutet ist.

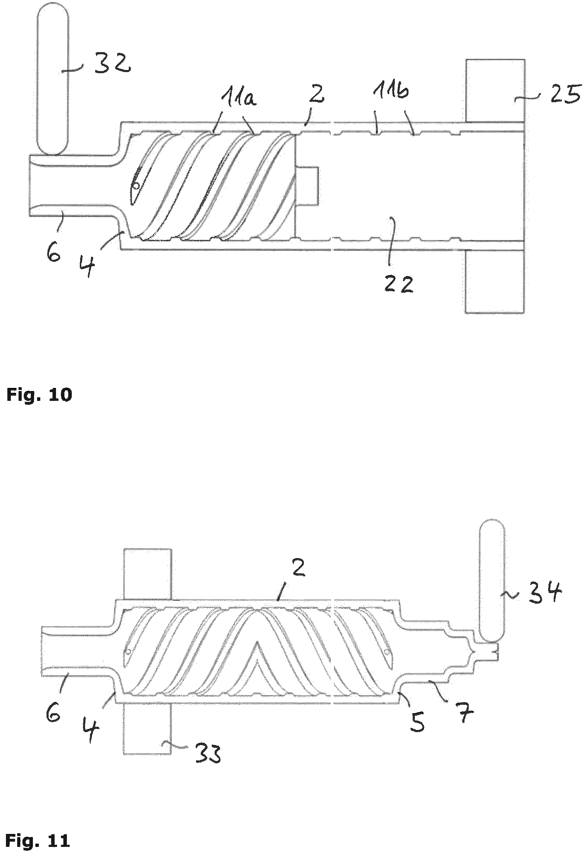

Anschließend wird mit einer weiteren Drückrolle 32 durch Drücken von außen der erste Stirnflansch 4 mit dem ersten Wellenzapfen 6 angeformt, wobei, wie in Fig. 10 dargestellt, während dieses Drückvorganges der Innendorn 22 noch innerhalb des Wellenhohlraumes 3 verbleiben kann. Alternativ kann auch der Innendorn 22 schon entfernt werden und die zu bildende Rotorhohlwelle 1 in geeigneter Weise gehalten werden. Der erste Wellenzapfen 6 kann auch mehrstufig ausgeformt werden.

Nach Ausbildung des ersten Stirnflansches 4 mit dem ersten Wellenzapfen 6 wird die insoweit bereits fertiggestellte Rotorhohlwelle 1 mit einem weiteren Spannwerkzeug 33 gehalten und, sofern noch nicht geschehen, der zweite Innendorn 22 entfernt und nachfolgend mit einer weiteren Drückrolle 34 der zweite Stirnflansch 5 mit dem zweiten Wellenzapfen 7 durch Drücken von außen geformt. Der Wellenzapfen 7 kann dabei auch mehrstufig ausgebildet werden.

Wenn ein weiteres Kühlmediumleitelement 18 gemäß Fig. 5 und 6 in die Rotorhohlwelle 1 eingesetzt werden soll, geschieht dies selbstverständlich bevor der zweite Stirnflansch 5 mit zweitem Wellenzapfen 7 geformt wird.

Der Verfahrensablauf zur Herstellung einer Rotorhohlwelle nach Fig. 1 ist prinzipiell derselbe, es kann jedoch ein einteiliger Innendorn verwendet werden, der bevorzugt erst nach der Formung des ersten Stirnflansches 4 mit dem ersten Wellenzapfen 6 entnommen wird.

Natürlich ist die Erfindung nicht auf die dargestellten Ausführungsbeispiele beschränkt. Änderungen und/oder Modifikationen der beschriebenen Ausführungsformen werden als alternative Formen der Erfindung betrachtet, sofern sie nicht vom Umfang der Erfindung abweichen, der durch die beigefügten Ansprüche definiert ist. So können die Stege 11, 11a, 11b auch andere Konturen aufweisen.

### Bezugszeichenliste:

- 1: Rotorhohlwelle
- 2: Zylindermantel
- 3: Wellenhohlraum
- 4,5: Stirnflansch
- 6,7: Wellenzapfen
- 8: Einlass
- 9,14,16,27,28,29,30: Pfeil
- 10: Innenfläche
- 11,11a,11b: Steg
- 12,12a,12b: kanalförmiger Bereich
- 13,15: Kühlmediumaustrittsöffnung
- 17: Kühlmediumzuführrohr
- 18: Kühlmediumleitelement
- 19: Kühlmediumdurchtrittsöffnung
- 20: Ausgangskörper
- 21,22: Innendorn
- 23,24: Vertiefung
- 25,33: Spannwerkzeug
- 26,32,34: Drückrolle
- 31: Doppelpfeil
- L: Längsachse

## Patentansprüche

1. Rotorhohlwelle für einen um eine Längsachse rotierenden Rotor einer elektrischen Maschine mit einem Zylindermantel (2), der einen Wellenhohlraum (3) umgibt, sowie beidseitig an dem Zylindermantel (2) angeordneten Stirnflanschen (4,5), wobei jeder Stirnflansch (4,5) jeweils in einen Wellenzapfen (6,7) übergeht und wobei in einem der Stirnflansche (4), insbesondere in dessen Wellenzapfen (6), ein Einlass (8) vorgesehen ist, über welchen ein Kühlmedium in den Wellenhohlraum (3) und an eine Innenfläche (10) des Zylindermantels (2) leitbar ist, wobei innerhalb des Wellenhohlraums (3) Kühlmediumleitelemente vorgesehen sind, welche das über den Einlass (8) eintretende Kühlmedium über die Innenfläche (10) des Zylindermantels (2) verteilen, wobei im Zylindermantel (2) wenigstens eine Kühlmediumaustrittsöffnung (13,15) vorgesehen ist, wobei die Rotorhohlwelle (1) einstückig durch Umformen aus einem rohrförmigen Ausgangskörper (20) gebildet ist, wobei die Kühlmediumleitelemente als aus der Innenfläche (10) des Zylindermantels (2) geformte, in den Wellenhohlraum (3) ragende erhabene Kontur (11,11a,11b) ausgebildet sind,
**dadurch gekennzeichnet,**
**dass** diese mittels Streckdrücken gebildet ist, wobei die erhabene Kontur (11, 11a,11b) aus der Innenfläche (10) des Zylindermantels (2) herausgedrückt ist, wobei die beiden Stirnflansche (4,5) mit jeweiligem Wellenzapfen (6,7) durch Drücken der beiden Enden des Ausgangskörpers (20) geformt sind, und dass die wenigstens eine Kühlmediumaustrittsöffnung (13,15) in der erhabenen Kontur (11,11a,11b) ausgebildet ist.

2. Rotorhohlwelle nach Anspruch 1,
**dadurch gekennzeichnet,**
**dass** die erhabene Kontur (11,11a,11b) mehrere umfänglich an der Innenfläche (10) des Zylindermantels (2) verteilte kanalförmige Bereiche (12,12a,12b) bildet.

3. Rotorhohlwelle nach Anspruch 2,
**dadurch gekennzeichnet,**
**dass** die kanalförmigen Bereiche (12,12a,12b) wenigstens bereichsweise helixförmig und/oder geradlinig ausgebildet sind.

4. Rotorhohlwelle nach einem oder mehreren der Ansprüche 1 bis 3,
**dadurch gekennzeichnet,**
**dass** in den Wellenhohlraum (3) ein weiteres rohrförmiges Kühlmediumleitelement (18) eingesetzt ist.

5. Rotor mit einer mit Blechpaketen bestückten Rotorhohlwelle (1) nach einem oder mehreren der Ansprüche 1 bis 4.

## Claims

1. Hollow rotor shaft for a rotor of an electric machine rotating about a longitudinal axis, having a cylindrical shell (2) which surrounds a shaft cavity (3), and end flanges (4, 5) arranged on both sides of the cylindrical shell (2), wherein each end flange (4, 5) respectively merges into a shaft journal (6, 7), and wherein an inlet (8) is provided in one of the end flanges (4), in particular in its shaft journal (6), via which inlet a cooling medium can be conducted into the shaft cavity (3) and to an inner surface (10) of the cylindrical shell (2), wherein cooling medium guide elements are provided within the shaft cavity (3), which distribute the cooling medium entering via the inlet (8) over the inner surface (10) of the cylindrical shell (2), wherein at least one cooling medium outlet opening (13, 15) is provided in the cylindrical shell (2), wherein the hollow rotor shaft (1) is formed in one piece by forming from a tubular starting body (20), wherein the cooling medium guide elements are formed as a raised contour (11, 11a, 11b) formed from the inner surface (10) of the cylindrical shell (2) and projecting into the shaft cavity (3),
**characterized in that**
said raised contour is formed by flow forming, wherein the raised contour (11, 11a, 11b) is pressed out from the inner surface (10) of the cylindrical shell (2), wherein the two end flanges (4, 5) with respective shaft journals (6, 7) are formed by spinning the two ends of the starting body (20), and **in that** the at least one cooling medium outlet opening (13, 15) is formed in the raised contour (11, 11a, 11b).

2. Hollow rotor shaft according to claim 1, **characterized in that** the raised contour (11, 11a, 11b) forms a plurality of channel-shaped regions (12, 12a, 12b) distributed circumferentially on the inner surface (10) of the cylindrical shell (2).

3. Hollow rotor shaft according to claim 2, **characterized in that** the channel-shaped regions (12, 12a, 12b) are formed at least in regions in a helical and/or rectilinear manner.

4. Hollow rotor shaft according to one or more of claims 1 to 3, **characterized in that** a further tubular cooling medium guide element (18) is inserted into the shaft cavity (3).

5. Rotor having a hollow rotor shaft (1) fitted with laminated cores according to one or more of claims 1 to 4.

## Revendications

1. Arbre creux de rotor pour un rotor d'une machine électrique tournant autour d'un axe longitudinal, comprenant une enveloppe cylindrique (2) qui entoure une cavité d'arbre (3), ainsi que des flasques frontaux (4, 5) disposés des deux côtés sur l'enveloppe cylindrique (2), chaque flasque frontal (4, 5) se prolongeant respectivement en un tourillon d'arbre (6, 7), et une entrée (8) étant prévue dans l'un des flasques frontaux (4), en particulier dans son tourillon d'arbre (6), par laquelle un fluide de refroidissement peut être guidé dans la cavité d'arbre (3) et vers une surface intérieure (10) de l'enveloppe cylindrique (2), des éléments de guidage du fluide de refroidissement étant prévus à l'intérieur de la cavité d'arbre (3), lesquels répartissent le fluide de refroidissement entrant par l'entrée (8) sur la surface intérieure (10) de l'enveloppe cylindrique (2), au moins une ouverture de sortie de fluide de refroidissement (13, 15) étant prévue dans l'enveloppe cylindrique (2), l'arbre creux de rotor (1) étant formé d'une seule pièce par formage à partir d'un corps de départ tubulaire (20), les éléments de guidage du fluide de refroidissement étant réalisés sous la forme d'un contour en relief (11, 11a, 11b) formé à partir de la surface intérieure (10) de l'enveloppe cylindrique (2) et faisant saillie dans la cavité d'arbre (3),
**caractérisé en ce que**
celui-ci est formé par fluotournage, le contour en relief (11, 11a, 11b) étant repoussé hors de la surface intérieure (10) de l'enveloppe cylindrique (2), les deux flasques frontaux (4, 5) avec leurs tourillons d'arbre respectifs (6, 7) étant formés par repoussage des deux extrémités du corps de départ (20), et **en ce que** la au moins une ouverture de sortie de fluide de refroidissement (13, 15) est réalisée dans le contour en relief (11, 11a, 11b).

2. Arbre creux de rotor selon la revendication 1, **caractérisé en ce que** le contour en relief (11, 11a, 11b) forme plusieurs zones en forme de canal (12, 12a, 12b) réparties circonférentiellement sur la surface intérieure (10) de l'enveloppe cylindrique (2).

3. Arbre creux de rotor selon la revendication 2, **caractérisé en ce que** les zones en forme de canal (12, 12a, 12b) sont réalisées au moins par endroits sous forme hélicoïdale et/ou rectiligne.

4. Arbre creux de rotor selon une ou plusieurs des revendications 1 à 3, **caractérisé en ce qu'**un autre élément tubulaire de guidage du fluide de refroidissement (18) est inséré dans la cavité d'arbre (3).

5. Rotor comportant un arbre creux de rotor (1) garni d'empilements de tôles selon une ou plusieurs des revendications 1 à 4.
